# EUROPÄISCHE PATENTSCHRIFT

(11) **EP 1 544 662 B1**
(45) Veröffentlichungstag und Bekanntmachung des Hinweises auf die Patenterteilung: **31.08.2011**
(21) Anmeldenummer: 04028132.1
(22) Anmeldetag: 26.11.2004
(51) Int. Cl.: G02B 27/01

(54) **Beobachtungssystem und -verfahren**
Observation system and observation process
Système et procédé d'observation

(30) Priorität: 18.12.2003 DE 10359691
(43) Veröffentlichungstag der Anmeldung: 22.06.2005
(73) Patentinhaber: Carl Zeiss AG, 73447 Oberkochen (DE)
(72) Erfinder: Spruck, Bernd, 73563 Mögglingen (DE); Edelmann, Martin, Dr., 73431 Aalen (DE)
(74) Vertreter: Geyer, Fehners & Partner

(56) Entgegenhaltungen:
- EP-A2- 1 217 413
- DE-C1- 19 620 658
- US-A- 5 805 119

## Beschreibung

Die Erfindung betrifft ein Beobachtungssystem gemäß dem Oberbegriff des Anspruchs 1 und ein Beobachtungsverfahren gemäß dem Oberbegriff des Anspruchs 9, die z.B. aus der EP 1 217 413 A2 bekannt sind bei denen für einen Betrachter ein zu betrachtendes Objekt mit weiteren Bildinformationen überlagert werden können.

Solche Überlagerungen können beispielsweise elektronisch dadurch erfolgen, daß das zu betrachtende Objekt mittels einer Kamera aufgenommen wird. Die mittels der Kamera erzeugten Bilddaten werden in einem Computer mit den zu überlagernden Bilddaten gemischt und dann einem Betrachter mittels einer Anzeige zugeführt. Nachteilig ist dabei, daß eine direkte Sicht des Betrachters nicht mehr gegeben ist. Der Betrachter kann seine Umwelt selbst nicht mehr direkt wahrnehmen, was seine Orientierungsfähigkeit deutlich nachteilig beeinträchtigt.

Ferner ist eine optische Mischung bekannt, bei der über einen Teilerspiegel bzw. einen Teilerwürfel das zu betrachtende Objekt einerseits und die zu überlagernde Bildinformation (augmentierter Anteil) von einer Anzeigeeinheit andererseits überlagert werden. Dies wird in der Regel so durchgeführt, daß sich die beiden zu überlagernden Bilder in Pupillenebenen befinden. Daher fehlt eine Ortsbeziehung des augmentierten Anteils bezüglich des realen Objekts. Ferner erfolgt die Überlagerung dadurch, daß eine optische Transparenz (mittels des Teilerwürfels bzw. Teilerspiegels) auf der gesamten Bildfläche für den Betrachter vorhanden ist. Die reale Szene wird also flächenmäßig vollständig mit dem augmentierten Anteil überlagert, wobei die Transparenz nur mittelbar durch Ändern der Helligkeit des realen Objekts (beispielhalber durch Blenden) sowie des augmentierten Anteils (Variation der Helligkeit der Anzeige) eingestellt werden kann.

Aus der DE 196 20 658 C1 ist ein Beobachtungssystem mit einer Kippspiegelmatrix als Modulator zur Bilderzeugung und einer dem Modulator nachgeordneten Vergrößerungsoptik zur Abbildung ins Auge des Betrachters bekannt.

Ausgehend hiervon ist es Aufgabe der Erfindung, ein Beobachtungssystem der eingangs gennanten Art und ein Beobachtungsverfahren der eingangs gennanten Art so zu verbessern, daß die Möglichkeiten der Überlagerung eines wahrnehmbaren realen Objekts mit weiteren Bildinformationen verbessert und flexibler sind.

Erfindungsgemäß wird die Aufgabe bei einem Beobachtungssystem der eingangs gennanten Art durch die Merkmale des kennzeichnenden Teils des Anspruches 1 gelöst. Damit wird es möglich, von dem zu betrachtenden Objekt genau definierte Anteile in den Beobachtungsstrahlengang und somit dem Auge des Betrachters zuzuführen. Die Bildinhalte der anderen Bereiche werden dem Betrachter nicht zugeführt und somit quasi "ausgestanzt". Ein ausgestanzter Bereich stellt als solches natürlich eine Bildinformation dar, so daß der Betrachter eine Überlagerung des zu betrachtenden Objekts mit der Bildinformation des ausgestanzten Bereiches wahrnimmt.

Der Modulator ist somit so ausgestaltet und angeordnet, daß nur die auf die sich im ersten Zustand befindenden Pixeln abgebildeten Objektteile für einen Betrachter über den Beobachtungsstrahlengang wahrnehmbar sind.

Insbesondere ist die Steuereinrichtung so ausgestaltet, daß sie von den Pixeln die Pixel in den zweiten Zustand schaltet, die zusammen eine gewünschte Bildinformation in der Ebene des flächigen Modulatörbereichs darstellen. Dabei kann es sich um Markierungen, wie z.B. Pfeile, Punkte, Kreuze oder sonstige einfache Figuren handeln. Es ist auch möglich, gewünschte Konturen oder Flächen darzustellen. Die einzige Begrenzung ist durch die Anzahl der Pixel und deren Größe bedingt.

Als Modulator können reflektive Modulatoren, wie z.B. eine Kippspiegelmatrix oder ein reflektives LCD-Modul, oder transmissive Modulatoren, wie z.B. ein transmissives LCD-Modul, verwendet werden.

Ferner kann das Beobachtungssystem eine Beleuchtungseinheit aufweisen, die den flächigen Modulatorbereich so mit einer Beleuchtungsstrahlung beaufschlagt, daß nur die auf die sich im zweiten Zustand befindenden Pixel treffende Beleuchtungsstrahlung in den Beobachtungsstrahlengang gelangt. Damit kann man die "ausgestanzten" Bildbereiche dem Betrachter farbig darbieten. Somit können beispielsweise die Pfeile in einer beliebigen Farbe dargestellt werden.

Eine besonders bevorzugte Ausgestaltung des erfindungsgemäßen Beobachtungssystems besteht darin, eine eine Anzeige und eine Anzeigeoptik aufweisende Anzeigeeinheit vorzusehen, wobei die Anzeigeoptik ein mittels der Anzeige erzeugtes Bild auf den flächigen Modulatorbereich abbildet und die Anzeigeeinheit derart angeordnet und ausgebildet ist, daß von der aufgrund der Abbildung mittels der Anzeigeoptik auf die Pixel treffenden Strahlung nur die Strahlung in den Beobachtungsstrahlengang eingekoppelt wird, die auf die sich im zweiten Zustand befindenden Pixeln trifft. Somit können die ausgestanzten Bildbereiche mit beliebigen anderen Bildinformationen aufgefüllt werden. Es wird also die gewünschte Überlagerung des realen zu betrachtenden Objekts mit weiteren Bildinformationen für den Betrachter erreicht.

Ferner kann die Steuereinrichtung so ausgebildet sein, daß sie jedes Pixel so ansteuert, daß die Verweildauer des Pixels im ersten und zweiten Zustand pro Zeiteinheit vorgegebenen Werten entspricht. Damit wird es möglich, die ausgestanzten Bereiche für den Betrachter teiltransparent erscheinen zu lassen. Er sieht also den ausgestanzten Teil mit geringerer Helligkeit im Vergleich zu nicht ausgestanzten Teilen des zu betrachtenden Objekts. Dies kann natürlich auch dazu eingesetzt werden, daß das komplette zu betrachtende Objekt mit geringerer Helligkeit dargestellt wird. In diesem Fall werden alle Pixel jeweils abwechselnd in den ersten und zweiten Zustand geschaltet. Auch ist es möglich, mit dieser Ansteuerung die Helligkeit des in ausgestanzte Bildabschnitte eingespiegelten Bildes relativ zu dem zu betrachtenden Objekt frei einzustellen.

Das Beobachtungssystem kann so ausgebildet sein, daß der Beobachtungsstrahlengang von einem Benutzer direkt einsehbar ist oder aber das eine Beobachtungsoptik im Beobachtungsstrahlengang vorgesehen ist, über die der Benutzer das am Modulator eingestellte Überlagerungsbild wahrnehmen kann. Damit ist es möglich, je nach vorgegebenen Bedingungen das gewünschte Beobachtungssystem zur Verfügung zu stellen.

Das Beobachtungssystem kann beispielsweise als auf dem Kopf des Benutzers zu tragende Vorrichtung ausgebildet sein. Eine solche Vorrichtung wird auch häufig HMD-Vorrichtung (Head Mounted Display-Vorrichtung) genannt. Andererseits kann das Beobachtungssystem bei jedem herkömmlichen Beobachtungssystem realisiert werden, bei dem eine Zwischenabbildung durchgeführt wird. Es muß im wesentlichen nur in der Zwischenbildebene der Modulator in geeigneter Art und Weise angeordnet werden. So kann das Beobachtungssystem insbesondere als Mikroskop ausgebildet werden. Damit können z. B. bei Operationen, die mittels eines solchen Mikroskops durchgeführt werden, weitere Bildinhalte für den Operateur in das von ihm wahrnehmbare Bild eingespielt werden, wie z.B. nicht sichtbare Blutgefäße und Knochen oder sonstiges.

Die Zwischenabbildungsoptik des Beobachtungssystems kann als fokussierbare oder autofokussierbare Optik. ausgebildet . sein. Ferner ist es möglich, wenn das Beobachtungssystem als HMD-Vorrichtung ausgebildet ist, noch eine Einrichtung vorzusehen, die die Kopfstellung des Benutzers erfaßt und diese Daten an die Steuereinrichtung weitergibt, die wiederum anhand dieser Daten die Pixel entsprechend ansteuert.

Die Aufgabe wird bei einem Beobachtungsverfahren der eingangs gennanten Art durch die Merkmale des kennzeichnenden Teils des Anspruches 9 gelöst.

Mit diesem Verfahren ist es leicht möglich, die gewünschte Bildüberlagerung zu erzeugen.

Bei dem Verfahren kann der flächige Modulatorbereich ferner so mit einer Beleuchtungsstrahlung beaufschlagt werden, daß nur die auf die sich im zweiten Zustand befindenden Pixeln treffende Beleuchtungsstrahlung in den Beobachtungsstrahlengang gelangt. Damit wird es möglich, daß die gewünschte Bildinformation farbig für einen Benutzer dargestellt wird.

Bei einer besonders bevorzugten Ausgestaltung des erfindungsgemäßen Beobachtungsverfahrens wird auf den flächigen Modulatorbereich ein zweites Bild derart abgebildet, daß von der aufgrund der Abbildung des zweiten Bildes auf die Pixel treffenden Strahlung nur die Strahlung in den Beobachtungsstrahlengang gelenkt wird, die auf die sich im zweiten Zustand befindenden Pixel trifft. Mit diesem Verfahren kann das zu betrachtende Objekt mit beliebigen Bilddaten in einfachster Art und Weise für einen Benutzer überlagernd dargestellt werden.

Ferner können bei dem erfindungsgemäßen Beobachtungsverfahren die Pixel jeweils so angesteuert werden, daß ihre Verweildauer im ersten und zweiten Zustand pro Zeiteinheit vorgegebenen Werten entspricht. Damit kann eine gewünschte Abschwächung bzw. Transparenz des zu beobachtenden Objekts eingestellt werden.

Weitere Vorteile und Ausgestaltungen der Erfindung ergeben sich aus der nachfolgenden Beschreibung von Ausführungsformen anhand der Figuren. Von den Figuren zeigen
- Fig. 1: ein Beobachtungssystem gemäß einer ersten Ausführungsform;
- Fig. 2: ein Beobachtungssystem gemäß einer zweiten Ausführungsform;
- Fig. 3: ein Beobachtungssystem gemäß einer dritten Ausführungsform, und
- Fig. 4: ein Beobachtungssystem gemäß einer vierten Ausführungsform.

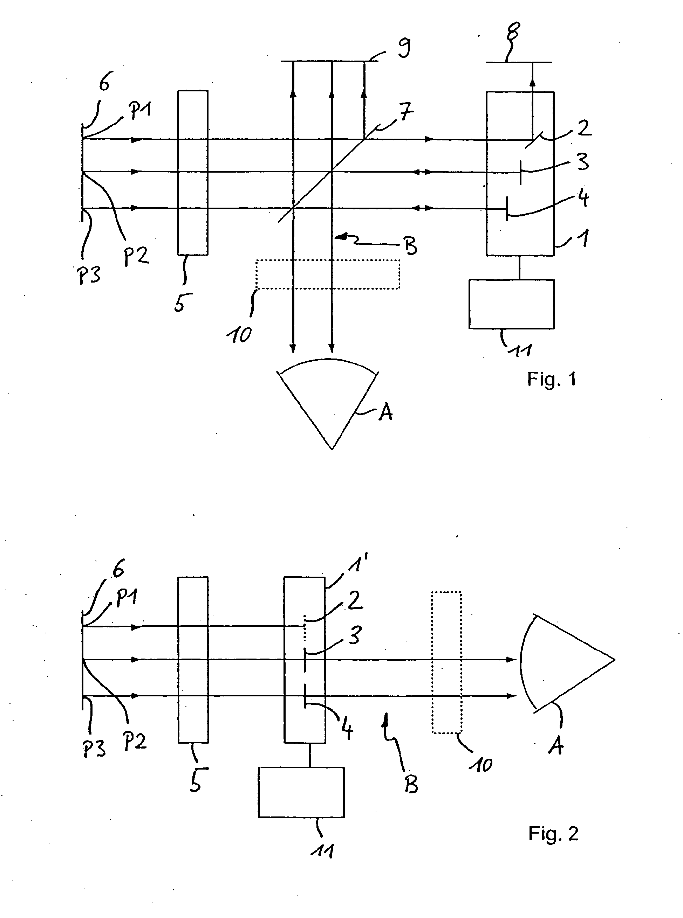

In Fig. 1 ist schematisch eine erste Ausführungsform des erfindungsgemäßen Beobachtungssystems gezeigt. Bei dieser Ausführungsform umfaßt das Beobachtungssystem einen Modulator 1, der eine Mehrzahl von Pixeln 2, 3, 4 aufweist, die einen flächigen Modulatorbereich bilden. Bei dem Modulator handelt es sich hier um eine Kippspiegelmatrix, die eine Mehrzahl von in Zeilen und Spalten angeordneten Kippspiegeln umfaßt, die jeweils in zwei unterschiedliche Kippstellungen schaltbar sind. In Fig. 1 sind zur Vereinfachung der Darstellung nur drei Kippspiegel 2, 3, 4 schematisch eingezeichnet.

Das Beobachtungssystem umfaßt ferner eine Zwischenabbildungsoptik 5, die so relativ zum flächigen Modulatorbereich angeordnet ist, daß sie ein zu betrachtendes Objekt 6 auf den flächigen Modulatorbereich abbildet. Anders gesagt, liegt der flächige Modulatorbereich in der Fokusebene der Zwischenabbildungsoptik 5.

Zwischen der Zwischenabbildungsoptik 5 und dem Modulator 1 ist ein Strahlteiler 7 angeordnet, der um 45° gegenüber der optischen Achse der Zwischenabbildungsoptik 5 geneigt ist. Das Beobachtungssystem umfaßt ferner eine erste und eine zweite Strahlfalle 8, 9 und kann optional eine Beobachtungsoptik 10 enthalten, die in einem Beobachtungsstrahlengang B des Beobachtungssystems angeordnet ist. Der Beobachtungsstrahlengang B verläuft hier von dem Modulator 1 über den Strahlteiler 7 bis zu einem schematisch eingezeichneten Auge A eines Betrachters.

Weiterhin ist eine Steuereinrichtung 11 vorgesehen, mittels der die einzelnen Pixel 2, 3 und 4 voneinander unabhängig jeweils in den ersten und zweiten Zustand (hier also die erste und zweite Kippstellung) geschaltet werden können.

Zur Erläuterung der Funktionsweise des Beobachtungssystems sind für drei Punkte P1, P2 und P3 des zu betrachtenden Objekts 6 die Strahlenverläufe im Beobachtungssystem eingezeichnet. Aus diesen Strahlenverläufen ist entnehmbar, daß das Objekt 6 (also die Punkte P1, P2 und P3) auf den flächigen Modulatorbereich abgebildet werden. Von den Pixeln 2 - 4 befinden sich die Pixel 3 und 4 im ersten Zustand und das Pixel 2 im zweiten Zustand. Die Kippstellung im ersten Zustand ist so, daß das Licht der entsprechenden Objektpunkte P2 und P3 in sich zurückreflektiert wird (also wieder zurück zum Strahlteiler 6) und an dem Strahlteiler 6 dann (zumindest teilweise) zum Auge A des Betrachters hin reflektiert wird. Das Licht, das auf die Pixel 3 und 4 trifft, wird somit in den Beobachtungsstrahlengang B eingekoppelt. Dahingegen wird das Licht, das auf den Pixel 2 trifft, der sich in der zweiten Kippstellung befindet, nach oben (in Fig. 1) auf die erste Strahlfalle 8 umgelenkt und gelangt nicht mehr in den Beobachtungsstrahlengang B. Somit ist für den Betrachter die Bildinformation auf dem Pixel 2 nicht wahrnehmbar; dieser Bildteil wird quasi "ausgestanzt. Bei der hier beschriebenen Ausführungsform erscheint dieser Bereich dunkel.

Der Modulator wird nun bevorzugt mittels der Steuereinrichtung 11 so angesteuert, daß eine gewünschte Bildinformation mittels der sich im zweiten Zustand befindenden Pixeln erzeugt wird. So kann beispielsweise ein Pfeil mit den im zweiten Zustand sich befindenden Pixeln als Bildinformation dargestellt werden. Mit den sich im zweiten Zustand befindenden Pixeln wird somit im flächigen Modulatorbereich und daher im darauf abgebildeten Bild eine zweite Bildinformation erzeugt, die in diesem Bereich die Bildinformation des abgebildeten Objekts 6 vollständig ersetzt.

Das Beobachtungssystem kann beispielsweise als HMD-Vorrichtung (Head Mountedu Display-Vorrichtung), also als eine Anzeigevorrichtung, die am Kopf eines Benutzers zu tragen ist, ausgebildet sein. In diesem Fall kann die mittels der sich im zweiten Zustand befindenden Pixeln dargestellte Bildinformation dazu dienen, bestimmte Bauteile für den die HMD-Vorrichtung tragenden Benutzer zu markieren. Eine mögliche Anwendung ist beispielsweise die Wartung einer Maschine. Dem Benutzer wird beim Betrachten der Maschine mittels beispielsweise eines Pfeils. das auszuwechselnde oder zu wartende Teil markiert.

Das Beobachtungssystem ist jedoch nicht auf HMD-Anwendungen beschränkt. Es kann vielmehr bei allen technischen Anwendungen eingesetzt werden, bei denen ein Objekt über ein Zwischenbild betrachtet wird. Ein Beispiel hierfür ist ein Mikroskop. Dieses muß dann nur so umgerüstet werden, daß in der Zwischenbildebene der Modulator 1 entsprechend angeordnet wird. Bei der Ausbildung als Mikroskop ist dann die Beobachtungsoptik 10 das Mikroskopokular.

In Fig. 2 ist eine zweite Ausführungsform des erfindungsgemäßen Beobachtungssystems gezeigt, wobei gleiche Elemente wie in Fig. 1 mit gleichen Bezugszeichen bezeichnet sind und zu deren Beschreibung auf die obigen Ausführungen verwiesen wird. Die in Fig. 2 gezeigte Ausführungsform unterscheidet sich in der von Fig. 1 gezeigten darin, daß anstatt des reflektiven Modulators 1 ein transmissiver Modulator 1' verwendet wird, der wiederum in der Fokusebene der Abbildungsoptik 5 angeordnet ist. Der transmissive Modulator 1' ist hier beispielsweise als LCD-Modul ausgebildet, welches eine Mehrzahl von in Zeilen und Spalten angeordnete Pixeln aufweist, von denen hier wiederum beispielshalber drei Pixel 2, 3 und 4 eingezeichnet sind. Im ersten Zustand transmittieren die Pixel das auf sie fallende Licht, während sie im zweiten Zustand das auf sie fallende Licht reflektieren oder absorbieren. Somit gelangt in den Beobachtungsstrahlengang B nur Licht, das von Pixeln stammt, die sich im ersten Zustand befinden. Bei dem hier schematisch dargestellten Beispiel betrifft dies die Pixel 3 und 4 und somit die Objektpunkte P2 und P3. Das Pixel 2 befindet sich im zweiten Zustand, so daß der Objektpunkt P1 für den Betrachter nicht wahrnehmbar ist.

Natürlich ist es bei den beiden oben beschriebenen Ausführungsformen auch möglich, die Bildinformation des Objekts 6 an den gewünschten Stellen (hier Pixel 2) nicht vollständig zu unterdrücken. So kann mittels der Steuereinheit 11 das Pixel 2 (bzw. die entsprechenden Pixel) zwischen dem ersten und zweiten Zustand hin- und hergeschaltet werden. Dabei wird durch die Verweildauer des Pixels 2 im ersten Zustand zur Verweildauer des Pixels 2 im zweiten Zustand (pro Zeiteinheit) festgelegt, wie stark die Bildinformation auf dem zweiten Pixel gegenüber der Bildinformation auf den anderen Pixeln, die sich im ersten Zustand befinden, abgeschwächt wird. Man kann somit Bereiche des zu betrachtenden Objekts selektiv mit geringerer Helligkeit für den Betrachter darstellen.

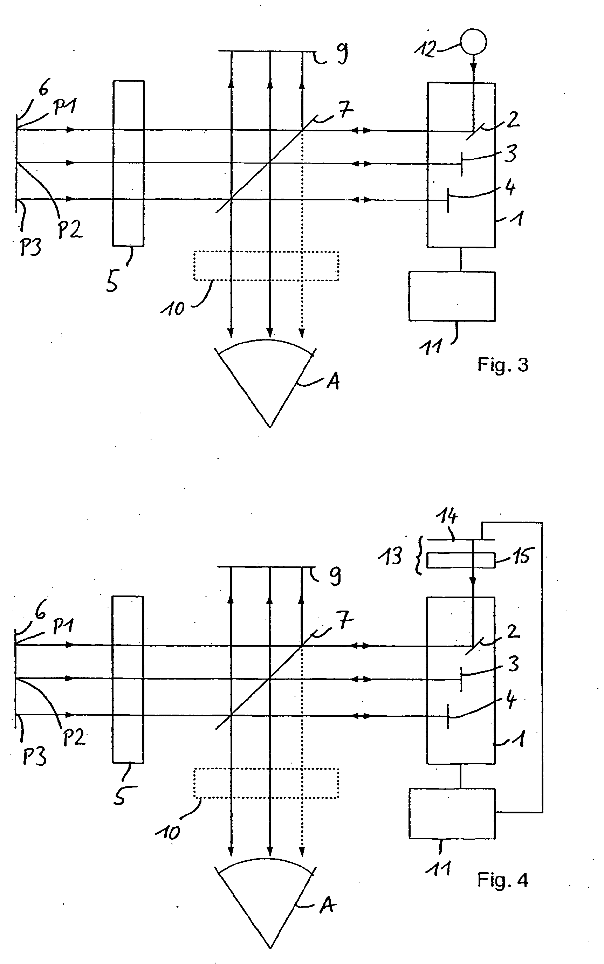

In Fig. 3 ist eine Weiterbildung der in Fig. 1 dargestellten Ausführungsform gezeigt, wobei gleiche Teile wie in Fig. 1 mit gleichen Bezugszeichen bezeichnet sind und deren Beschreibung nicht wiederholt wird. Die Ausführungsform von Fig. 3 unterscheidet sich von der in Fig. 1 darin, daß anstatt der ersten Strahlfalle 8 eine Lichtquelle 12 angeordnet ist, die Licht einer vorbestimmten Farbe abgibt. Als Lichtquelle 12 kann beispielsweise eine Leuchtdiode eingesetzt werden. Die Lichtquelle 12 ist so relativ zum Lichtmodulator 1 angeordnet, daß sie den flächigen Modulatorbereich beleuchtet, wobei jedoch nur das Licht, das von den sich im zweiten Zustand befindenden Pixeln 2 reflektiert wird, in den Beobachtungsstrahlengang B eingekoppelt wird, wie durch den teilweise gestrichelten Strahlenverlauf dargestellt ist. Damit wird für den Betrachter der Bereich, der sich im zweiten Zustand befindenden Pixeln nicht dunkel, sondern farbig dargestellt. Wenn mit den sich im zweiten Zustand befindenden Pixeln ein Pfeil dargestellt wird und die Lichtquelle 12 rotes Licht abgibt, ist dieser Pfeil für den Betrachter rot.

Zwischen der Lichtquelle 12 und dem Lichtmoduiator 1 kann eine Beleuchtungsoptik (nicht eingezeichnet) angeordnet sein. Die Beleuchtungsoptik ist bevorzugt so ausgebildet, daß ihre Austrittspupille auf dem flächigen Modulatorbereich liegt. Die Abbildung der Lichtquelle 12 auf den Lichtmodulator 1 entspricht somit der Köhlerschen Beleuchtung in einem Mikroskop. Dadurch wird vorteilhaft erreicht, daß nicht die Struktur der Lichtquelle 12 auf dem flächigen Modulatorbereich abgebildet wird, sondern daß nur der integrale Helligkeitsanteil an jedem Ort des flächigen Modulatorbereichs gleichmäßig zur Auswirkung kommt. Natürlich kann die Abbildungsoptik auch weggelassen werden, insbesondere wenn man eine flächenhafte Lichtquelle, wie z.B. eine OLED (organische Leuchtdiode) verwendet. Eine solche Lichtquelle wirkt als Flächenstrahler, so daß sich bereits eine etwas diffuse Beleuchtung ergibt. Insbesondere weist eine OLED keine erkennbaren Strukturen wie etwa eine Glühwendel bei einer Lampe auf.

Eine weitere Fortbildung der Ausführungsform von Fig. 1 ist in Fig. 4 dargestellt, wobei gleiche Elemente wie in Fig. 1 wiederum mit gleichen Bezugszeichen bezeichnet sind. Die Ausführungsform von Fig. 4 unterscheidet sich von der in Fig. 1 darin, daß anstatt der ersten Strahlfalle 8 eine Anzeigeeinheit 13 mit einer Anzeige 14 und einer Anzeigeoptik 15 angeordnet ist-. Die Anzeige 14 kann beispielsweise eine selbstleuchtende Anzeige oder auch eine beleuchtete Anzeige sein. Die Anzeige 14 wird bevorzugt auch mittels der Steuereinheit 11 gesteuert, wobei die Anzeige 14 bevorzugt eine flächige Anzeige ist. Die Anzeige 14 wird mittels der Anzeigeoptik 15 auf den flächigen Modulatorbereich abgebildet. Die Anzeigeeinheit 13 ist dabei so ausgebildet und relativ zum Modulator 1 angeordnet, daß nur das von der Anzeige 14 kommende und auf die Pixel treffende Licht in den Beobachtungsstrahlengang B eingekoppelt wird, das von den Pixeln reflektiert wird, die sich im zweiten Zustand befinden. Es ist somit bei der Ausführungsform von Fig. 4 möglich, für einen Betrachter gezielt Teile des zu betrachtenden Objekts 6 auszuschneiden und gleichzeitig in diesen ausgeschnittenen Teilen andere Bildinformationen (von der Anzeigeeinheit 13) einzuspielen. Der Betrachter sieht daher eine Überlagerung des zu betrachtenden Objekts mit den weiteren Bildinformationen, wobei im Bereich der weiteren Bildinformationen das Objekt vollständig unterdrückt ist. Anders gesagt werden die mittels der sich im zweiten Zustand befindenden Pixel "ausgestanzten" Bildinformationen des Objekts 6 mit anderen Bildinformationen aufgefüllt.

Natürlich ist es auch bei den Ausführungsformen von Fig. 3 und 4 möglich, die Bildinformationen des Objekts 6 nicht vollständig "auszustanzen" sondern diese Bildinformationen mit geringerer Helligkeit darzustellen. Dies wird durch eine entsprechende Ansteuerung der Pixel und den Verweilzeiten im ersten und zweiten Zustand möglich. Wenn man dies auf alle Pixel des Modulators anwendet, läßt sich somit eine Überlagerung des zu betrachtenden Objekts 6 mit einem anderen Bild so einstellen, daß immer ein gewünschten Helligkeitsverhältnis zwischen dem betrachteten Objekt 6 und dem überlagerten Bild vorhanden ist. Wenn sich die Helligkeit des Objekts 6 im Laufe der Zeit verändert, kann man durch Messung der Objekthelligkeit und eine entsprechende Rückkopplung über die Steuereinheit 10 sogar erreichen, daß das gewünschte Helligkeitsverhältnis (relativ) unabhängig von der tatsächlichen Helligkeit des Objekts beibehalten wird. Dies ist natürlich bei allen Ausführungsformen der Erfindung möglich.

Weiterhin ist es auch möglich, einen bestimmten Bereich mittels der sich im zweiten Zustand befindenden Pixeln aus dem zu betrachtenden Objekt auszustanzen und in diesem Bereich die weiteren Bildinformationen von der Anzeigeeinheit 13 darzustellen. In diesem Fall kann die Auflösung der dargestellten Bildinformationen höher sein als die durch die Pixel des Modulators 1 vorgegebene Auflösung. Dazu kann beispielsweise die Anzeige 14 eine höhere Auflösung als die Pixelgröße des Modulators 1 aufweisen oder die Anzeige 14 wird mittels der Anzeigeoptik 15 verkleinert auf die Modulatorfläche F abgebildet.

Ferner kann bei den beschriebenen Ausführungsformen die Zwischenabbildungsoptik als fokussierbare Optik ausgebildet sein, die bevorzugt autofokus-fähig ist. Dazu können bekannte Autofokussierverfahren eingesetzt werden. Wenn das Beobachtungssystem als HMD-Vorrichtung ausgebildet ist, können gleichfalls solche Fokussiersysteme eingesetzt werden. Des weiteren ist es auch möglich, die Kopfbestellung des HMD-Vorrichtung tragenden Benutzers laufend zu erfassen und bei der Ansteuerung des Modulators 1 und gegebenenfalls der Anzeigeeinheit 13 zu berücksichtigen.

Bei der vorliegenden Erfindung sind die Zwischenabbildungsoptik 5 und die gegebenenfalls vorgesehene Beobachtungsoptik 10 bevorzugt so ausgebildet, daß für den Benutzer eine 1:1-Abbildung der Umgebung durch geführt wird. Der Benutzer sieht somit die Umgebung über die Zwischenabbildungsoptik und die gegebenenfalls vorgesehene Beobachtungsoptik 10 so, wie er sie ohne die Zwischenabbildungsoptik 5 und die Beobachtungsoptik 10 wahrnehmen würde.

Das Beobachtungssystem kann so ausgeführt sein, daß eine Strahlumlenkung seitlich nach außen erfolgt, so daß im äußersten Fall eine Verbreiterung der Augenbasis wirksam wird und damit eine etwas überhöhte Stereodarstellung erfolgen kann, aber ansonsten keine Einschränkungen der natürlichen Seheindrücke bewirkt wird.

Eine weitere besonders wirksame Ausführungsform der Erfindung besteht darin, daß die beschriebenen Ausführungsformen in einer HMD-Vorrichtung jeweils für beide Augen getrennt vorhanden sind. Dadurch ergibt sich eine Stereotauglichkeit des Systems, wobei die zu augmentierenden Objekte (ausgestanzten Bereiche) so in dem jeweiligen flächigen Modulatorbereich (für das linke und rechte Auge) eingestellt werden, daß eine stereoskopische Darstellung der ausgestanzten Bereiche bewirkt wird.

Somit kann in einem stereoskopischen Strahlengang, wie er beispielsweise bei einer HMD-Vorrichtung oder auch bei einem Mikroskop vorkommt, eine echte räumliche Bildmischung mit dem zu augmentierenden Objekt vorgenommen werden.

Bei den beschriebenen Ausführungsformen der Erfindung ist ein elektrisch ansteuerbar, optisch flächenhaft auf Bilder wirkender Modulator vorgesehen, der zwei Bilder flächenhaft in mit den durch die Pixel des Modulators gegebene Auflösung ineinander verschachteln kann. Es handelt sich daher um ein System, bei dem ein Eingangsbild in ein Zwischenbild auf den räumlichen Modulator abgebildet wird und an dem Zwischenbild eine Modulation bzw. Mischung mit einem zweiten beliebigen Bild in beliebiger und bevorzugt nur durch die Pixelquantelung begrenzter Form in einer flächigen Art und Weise durchgeführt werden kann.

## Patentansprüche

1. Beobachtungssystem mit einem Modulator (1), der einen aus einer Mehrzahl von Pixeln (2, 3, 4) gebildeten flächigen Modulatorbereich umfaßt, einer mit dem Modulator (1) verbundenen Steuereinrichtung (11), mittels der die Pixel (2 - 4) voneinander unabhängig jeweils in einen ersten und einen zweiten Zustand schaltbar sind, einer Zwischenabbildungsoptik (5), die ein zu betrachtendes Objekt (6) auf den flächigen Modulatorbereich abbildet, **dadurch gekennzeichnet,**
**daß** im Beobachtungssystem die Strahlenverläufe so vorgegeben sind, daß ein Betrachter das Objekt (6) mittels dem Beobachtungssystem nur über den Modulator (1) wahrnehmen kann, und daß von der aufgrund der Abbildung mittels der Zwischenabbildungsoptik (5) auf die Pixel treffenden Strahlung nur die Strahlung in einen vom Modulator (1) bis zum Auge (A) des Betrachters verlaufenden Beobachtungsstrahlengang (B) gelangt, die auf die sich im ersten Zustand befindenden Pixel trifft, so daß der Betrachter die Teile des Objekts (6), die der auf die sich im zweiten Zustand befindenden Pixel treffenden Strahlung entsprechen, nicht wahrnehmen kann.

2. Beobachtungssystem nach Anspruch 1, **dadurch gekennzeichnet, daß** die Steuereinrichtung (11) von den Pixeln (2 - 4) die Pixel (2) in den zweiten Zustand schaltet, die zusammen eine gewünschte Bildinformation in der Ebene des flächigen Modulatorbereichs darstellen.

3. Beobachtungssystem nach einem der obigen Ansprüche, **dadurch gekennzeichnet, daß** eine Beleuchtungseinheit (12) vorgesehen ist, die den flächigen Modulatorbereich so mit einer Beleuchtungsstrahlung beaufschlagt, daß nur die auf die sich im zweiten Zustand befindenden Pixeln treffende Beleuchtungsstrahlung in den Beobachtungsstrahlengang (B) gelangt.

4. Beobachtungssystem nach Anspruch 1 oder 2, **dadurch gekennzeichnet, daß** eine eine Anzeige (14) und eine Anzeigeoptik (15) aufweisende Anzeigeeinheit (13) vorgesehen ist, wobei die Anzeigeoptik (15) ein mittels der Anzeige (14) erzeugtes Bild auf den flächigen Modulatorbereich abbildet und die Anzeigeeinheit (13) so angeordnet und ausgebildet ist, daß von der aufgrund der Abbildung mittels der Anzeigeoptik (15) auf die Pixel treffende Strahlung nur die Strahlung in den Beobachtungsstrahlengang (B) gelangt, die auf die sich im zweiten Zustand befindenden Pixeln trifft.

5. Beobachtungssystem nach einem der obigen Ansprüche, **dadurch gekennzeichnet, daß** die Steuereinrichtung (11) jeden Pixel (2 - 4) so ansteuern kann, daß die Verweildauer des Pixels im ersten und im zweiten Zustand pro Zeiteinheit vorgegebenen Werten entspricht.

6. Beobachtungssystem nach einem der obigen Ansprüche, **dadurch gekennzeichnet, daß** der Beobachtungsstrahlengang (B) von einem Benutzer direkt einsehbar ist.

7. Beobachtungssystem nach einem der Ansprüche 1 bis 5, **dadurch gekennzeichnet, daß** im Beobachtungsstrahlengang (B) eine Beobachtungsoptik (9) für einen Benutzer angeordnet ist.

8. Beobachtungssystem nach einem der obigen Ansprüche, **dadurch gekennzeichnet, daß** der Modulator (1) als reflektiver Modulator ausgebildet ist.

9. Beobachtungsverfahren, bei dem ein zu beobachtendes Objekt (6) auf einen aus einer Mehrzahl von Pixeln (2, 3, 4) gebildeten flächigen Modulatorbereich eines Modulators (1) abgebildet wird, wobei von den Pixeln, die jeweils in einen ersten und einen zweiten Zustand schaltbar sind, die Pixel in den zweiten Zustand geschaltet werden, die zusammen eine gewünschte Bildinformation in der Ebene des flächigen Modulatorbereichs darstellen, **dadurch gekennzeichnet, daß**
die Strahlenverläufe so vorgegeben sind, daß ein Betrachter das Objekt (6) bei dem Beobachtungsverfahren nur über den Modulator (1) wahrnehmen kann,
und daß von der aufgrund der Abbildung des Objekts auf die Pixel treffenden Strahlung nur die Strahlung in einen vom Modulator (1) bis zum Auge (A) des Betrachters verlaufenden Beobachtungsstrahlengang (B) gelenkt wird, die auf die sich im ersten Zustand befindenden Pixel trifft, so daß für den Betrachter die Teile des Objekts (6), die der auf den sich im zweiten Zustand befindenden Pixel treffenden Strahlung entsprechen, nicht wahrnehmbar sind.

10. Verfahren nach Anspruch 9, **dadurch gekennzeichnet, daß** der flächige Modulatorbereich so mit einer Beleuchtungsstrahlung beaufschlagt wird, daß nur die auf die sich im zweiten Zustand befindenden Pixeln treffende Beleuchtungsstrahlung in den Beobachtungsstrahlengang eingekoppelt wird.

11. Verfahren nach Anspruch 9, **dadurch gekennzeichnet, daß** auf den flächigen Modulatorbereich ein zweites Bild derart abgebildet wird, daß von der aufgrund der Abbildung des zweiten Bildes auf die Pixel treffende Strahlung nur die Strahlung in den Beobachtungsstrahlengang eingekoppelt wird, die auf sich im zweiten Zustand befindenden Pixeln trifft.

12. Verfahren nach einem der Ansprüche 9 bis 11, **dadurch gekennzeichnet, daß** jedes Pixel so angesteuert wird, daß seine Verweildauer im ersten und zweiten Zustand pro Zeiteinheit vorgegebenen Werten entspricht.

13. Beobachtungsverfahren nach einem der Ansprüche 9 bis 12, **dadurch gekennzeichnet, daß** die in den Beobachtungsstrahlengang (B) gelenkte Strahlung an den entsprechenden Pixeln reflektiert wird.

## Claims

1. An observation system, comprising a modulator (1) which comprises a two-dimensional modulator region formed by a plurality of pixels (2, 3, 4); a control unit (11), which is connected to the modulator (1) and by means of which the pixels (2 - 4) are each independently switchable into first and second conditions; intermediate imaging optics (5) which project an object (6) to be viewed onto the two-dimensional modulator region, **characterized in that**,
the ray paths in the observation system are defined such that a viewer can perceive the object by means of the observation system only via the modulator (1),
and that of the radiation incident on the pixels due to the projection by means of the intermediate imaging optics (5), only that radiation which impinges on the pixels being in the first condition passes into an optical observation path (B) extending from the modulator (1) to the eye (A) of the viewer, so that the viewer can not perceive parts of the object which correspond to radiation which impinges onto the pixels being in the second condition.

2. The observation system as claimed in Claim 1, **characterized in that** the control unit (11) switches those pixels (2) of the pixels (2 - 4) into the second condition which together display desired image information in the plane of the two-dimensional modulator region.

3. The observation system as claimed in any one of the above Claims, **characterized in that** an illumination unit (12) is provided, which directs illumination radiation onto the two-dimensional modulator region in such a way that only that illumination radiation which impinges on the pixels being in the second condition passes into the optical observation path (B).

4. The observation system as claimed in Claim 1 or 2, **characterized in that** a display unit (13) comprising a display (14) and display optics (15) is provided, said display optics (15) projecting an image generated by means of the display (14) onto the two-dimensional modulator region, and said display unit (13) being arranged and provided such that, of the radiation impinging on the pixels due to the projection by means of the display optics (15), only that radiation which impinges on the pixels being in the second condition passes into the optical observation path (B).

5. The observation system as claimed in any one of the above Claims, **characterized in that** the control unit (11) can control each pixel (2 - 4) such that the dwell period of each pixel in the first and second conditions per time unit corresponds to predetermined values.

6. The observation system as claimed in any one of the above Claims, **characterized in that** the optical observation path (B) can be directly inspected by a user.

7. The observation system as claimed in any one of Claims 1 to 5, **characterized in that** observation optics (9) for a user are arranged in the optical observation path (B).

8. The observation system as claimed in any one of the above Claims, **characterized in that** the modulator (1) is provided as a reflective modulator.

9. An observation method, which comprises projecting an object (6) to be observed onto a two-dimensional modulator region of a modulator (1) formed by a plurality of pixels (2, 3, 4), said pixels each being independently switchable into a first and a second condition, switching those pixels into the second condition which together display desired image information in the plane of the two-dimensional modulator region, **characterized in that**
the ray paths are defined such that a viewer can perceive the object by means of the observation system only via the modulator (1),
and that directing only that radiation, of the radiation impinging on the pixels due to said projection, which impinges on the pixels being in the first condition into an optical observation path (B) extending from the modulator (1) to the eye of the viewer, such that those parts of the object which correspond to radiation which impinges onto the pixels being in the second condition are not perceivable by a viewer.

10. The method as claimed in Claim 9, **characterized in that** illumination radiation is directed onto the two-dimensional modulator region in such a way that only that illumination radiation which impinges on the pixels being in the second condition is coupled into the optical observation path.

11. The method as claimed in Claim 9, **characterized in that** a second image is projected onto the two-dimensional modulator region in such a way that, of the radiation impinging on the pixels due to the projection of the second image, only that radiation which impinges on the pixels being in the second condition is coupled into the optical observation path.

12. The method as claimed in any one of Claims 9 to 11, **characterized in that** each pixel is controlled such that its dwell period in the first and second conditions per time unit corresponds to predetermined values.

13. The observation method as claimed in any one of Claims 9 to 12, **characterized in that** the radiation directed into the optical observation path (B) is reflected by the corresponding pixels.

## Revendications

1. Système d'observation, comportant un modulateur (1), qui comprend une zone plane formée par une pluralité de pixels (2, 3, 4), un dispositif de commande (11), qui est relié au modulateur (1) et au moyen duquel les pixels (2 - 4) peuvent être commutés indépendamment les uns des autres respectivement dans un premier et un deuxième état, une optique de reproduction intermédiaire (5) qui reproduit sur la zone plane du modulateur un objet (6) à examiner, **caractérisé**
**en ce que** dans le système d'observation les tracés des rayons sont prédéfinis de telle sorte qu'un observateur ne peut discerner l'objet (6) avec le système d'observation que par l'intermédiaire du modulateur (1), et
**en ce que** parmi le rayonnement, qui atteint les pixels du fait de la reproduction au moyen de l'optique de reproduction intermédiaire (5), seul le rayonnement atteignant les pixels qui se trouvent dans le premier état parvient dans une trajectoire des rayons d'observation (B), qui s'étend depuis le modulateur (1) jusqu'à l'oeil (A) de l'observateur, de telle sorte que l'observateur ne peut pas discerner les parties de l'objet (6) qui correspondent au rayonnement atteignant les pixels qui se trouvent dans le deuxième état.

2. Système d'observation selon la revendication 1, **caractérisé en ce que** parmi les pixels (2 - 4), le dispositif de commande (11) commute dans le deuxième état les pixels (2) qui représentent conjointement une information image souhaitée dans le plan de la zone plane du modulateur.

3. Système d'observation selon l'une quelconque des revendications précédentes, **caractérisé en ce qu'**il est prévu une unité d'éclairage (12), qui envoie dans la zone plane du modulateur un rayonnement d'éclairage, de telle sorte que seul le rayonnement d'éclairage atteignant les pixels qui se trouvent dans le deuxième état parvient dans la trajectoire des rayons d'observation (B).

4. Système d'observation selon la revendication 1 ou 2, **caractérisé en ce qu'**il est prévu une unité d'affichage (13) qui comporte un afficheur (14) et une optique d'affichage (15), l'optique d'affichage (15) reproduisant sur la zone plane du modulateur une image générée au moyen de l'afficheur (14), et l'unité d'affichage (13) est agencée et configurée de telle sorte que parmi le rayonnement atteignant les pixels du fait de la reproduction au moyen de l'optique d'affichage (15), seul le rayonnement atteignant les pixels qui se trouvent dans le deuxième état parvient dans la trajectoire des rayons d'observation (B).

5. Système d'observation selon l'une quelconque des revendications précédentes, **caractérisé en ce que** le dispositif de commande (11) peut activer chaque pixel (2 - 4), de telle sorte que la durée d'attardement du pixel dans le premier et le deuxième état correspond à des valeurs prédéfinies par unité de temps.

6. Système d'observation selon l'une quelconque des revendications précédentes, **caractérisé en ce que** la trajectoire des rayons d'observation (B) peut être examinée directement par un utilisateur.

7. Système d'observation selon l'une quelconque des revendications 1 à 5, **caractérisé en ce qu'**une optique d'observation (9) pour un utilisateur est montée dans la trajectoire des rayons d'observation (B).

8. Système d'observation selon l'une quelconque des revendications précédentes, **caractérisé en ce que** le modulateur (1) est réalisé sous la forme d'un modulateur réflectif.

9. Procédé d'observation, dans lequel un objet (6) à observer est reproduit sur une zone plane d'un modulateur (1), formée par une pluralité de pixels (2, 3, 4), sachant que parmi les pixels qui peuvent être commutés respectivement dans un premier et dans un deuxième état, les pixels qui représentent conjointement une information image souhaitée dans le plan de la zone plane du modulateur sont commutés dans le deuxième état, **caractérisé**
**en ce que** les tracés des rayons sont prédéfinis de telle sorte qu'un observateur ne peut discerner l'objet (6) avec le procédé d'observation que par l'intermédiaire du modulateur (1), et
**en ce que** parmi le rayonnement qui atteint les pixels du fait de la reproduction de l'objet, seul le rayonnement atteignant les pixels qui se trouvent dans le premier état est guidé dans une trajectoire des rayons d'observation (B) s'étendant depuis le modulateur (1) jusqu'à l'oeil (A) de l'observateur, de telle sorte que les parties de l'objet (6) qui correspondent au rayonnement atteignant les pixels qui se situent dans le deuxième état ne peuvent pas être discernées par l'observateur.

10. Procédé selon la revendication 9, **caractérisé en ce que** la zone plane du modulateur reçoit un rayonnement d'éclairage, de telle sorte que seul le rayonnement d'éclairage atteignant les pixels qui se trouvent dans le deuxième état est injecté dans la trajectoire des rayons d'observation.

11. Procédé selon la revendication 9, **caractérisé en ce qu'**une deuxième image est reproduite sur la zone plane du modulateur, de telle sorte que parmi le rayonnement qui atteint les pixels du fait de la reproduction d'une deuxième image seul le rayonnement atteignant les pixels qui se trouvent dans le deuxième état est injecté dans la trajectoire des rayons d'observation.

12. Procédé selon l'une quelconque des revendications 9 à 11, **caractérisé en ce que** chaque pixel est activé de telle sorte que sa durée d'attardement dans le premier et le deuxième état correspond à des valeurs par unité de temps.

13. Procédé selon l'une quelconque des revendications 9 à 12, **caractérisé en ce que** le rayonnement guidé dans la trajectoire des rayons d'observation (B) est réfléchi au niveau des pixels correspondants.
